# EUROPEAN PATENT APPLICATION

(11) **EP 0 722 688 A1**
(43) Date of publication of application: **24.07.1996**
(21) Application number: 96200141.8
(22) Date of filing: 10.01.1996
(51) Int. Cl.: A47J 27/022

(54) **Variable-thickness metal bottom, particularly for pots or the like**

(30) Priority: 20.01.1995 IT PD950016
(71) Applicant: RONDA EUROPA S.P.A., I-36010 Zané (IT)
(72) Inventor: Ronda, Giovanni, I-36016 Thiene (Vicenza) (IT)
(74) Representative: Modiano, Guido, Dr.-Ing.

(57) **Abstract**

A variable-thickness metal bottom, particularly for pots or the like, characterized in that its surface (11), which is meant to be joined to the lower part of the pot (12) or the like, is shaped so as to form a plurality of protrusions (13) evenly distributed thereon.

## Description

The present invention relates to a variable-thickness metal bottom, particularly but not exclusively adapted for pots or the like.

It is known that pots have a flat bottom because they must rest on cooking ranges, grilles of ovens, or on surfaces of various kinds.

Said base or bottom is either monolithic with said pot or is applied thereto after being first formed separately and optionally by using a different material with respect to the pot.

For example, conventional pots or the like are now made of stainless steel and a bottom made of commercially pure aluminum or alloys thereof having excellent heat accumulation and transmission characteristics is applied thereto.

Considering in particular pots or the like with an applied bottom made of commercially pure aluminum or alloys thereof, the connection between said bottom and the pot can occur by simply pressing the parts to be joined at the temperature at which the aluminum or alloys thereof soften, which is approximately between 400 and 500 degrees Celsius.

This process that acts by simple pressure at high temperature is, owing to its simplicity and quick execution, a low-cost process the qualitative results whereof are satisfactory and well-tested.

To achieve a reliable connection between the bottom and the pot, the bottom must have a constant thickness, since in the current state of the art it is not possible to apply, with satisfactory results, a variable-thickness bottom to the lower part of a pot.

Several attempts in this regard have in fact failed to achieve appreciable results, since the local thickness difference entails a different behavior under pressure.

However, for particular pots or for electrical household appliances provided with a container acting as pot, it would be convenient that the shape were not restricted to a flat bottom.

This is the case of pots in which mixers or beaters are inserted and wherein the tools trace curved paths.

A principal aim of the present invention is to provide a variable-thickness bottom that can be stably connected to a pot or to a similar container the bottom whereof is not flat.

An object of the present invention is to provide a bottom that can be manufactured with production costs allowing pots or the like, in which the lower part requires a different local thickness for said bottom, to become competitive.

Another object of the present invention is to provide a bottom that can be connected by means of technologies and machines already in use in the field.

Another object of the present invention is to provide a bottom providing a connection that does not compromise any aesthetic requirements of the finished product.

This aim, these objects, and others which will become apparent hereinafter are achieved by a variable-thickness metal bottom, particularly for pots or the like, characterized in that its surface, which is to be joined to the lower part of the pot or the like, is shaped so as to form a plurality of protrusions evenly distributed thereon.

Further characteristics and advantages of the present invention will become apparent from the following detailed description of two embodiments thereof, illustrated only by way of non-limitative examples in the accompanying drawings, wherein:
figure 1 is an axonometric view of a bottom, in a first embodiment thereof, connected to a pot having a curved base;
figure 2 is an exploded view of the bottom and the pot of figure 1;
figure 3 is a sectional view of a detail of the connection between the bottom and the pot of figure 1;
figure 4 is a side view of the bottom of figure 1;
figure 5 is an axonometric view of a bottom in a second embodiment thereof, applied to another type of pot;
figure 6 is an exploded view of the bottom and of the pot of figure 5;
figure 7 is a top view of the bottom of figure 5;
figure 8 is a sectional view of the bottom of figure 5;
figure 9 is an axonometric view of a detail of the bottom of figure 5.

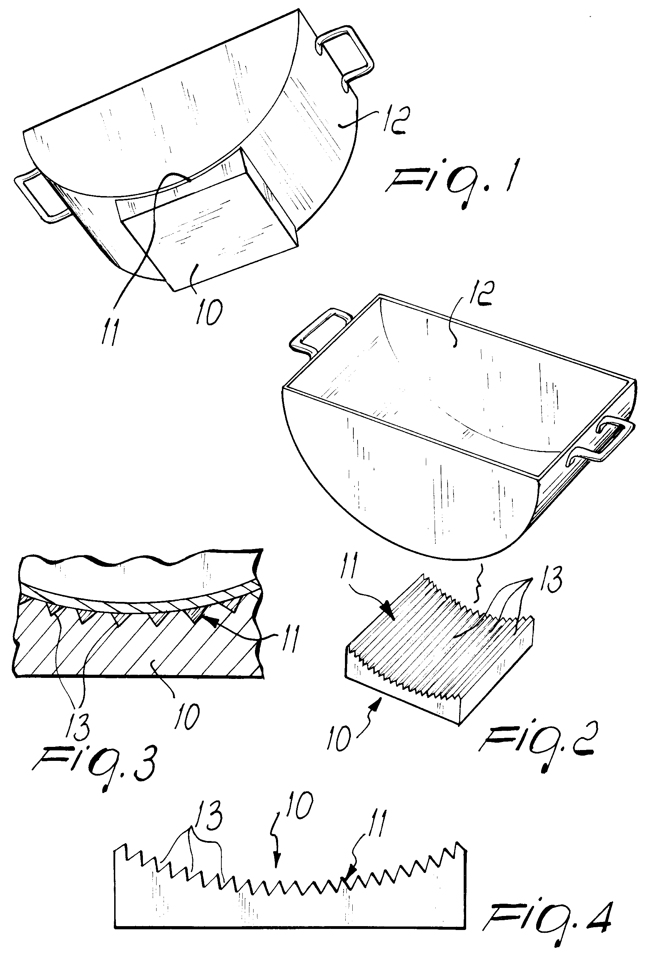

With particular reference to figures 1 to 4, a metal bottom, particularly for pots and the like having a curved lower part, according to the invention, is generally designated by the reference numeral 10 in a first embodiment.

The bottom 10, in this case, is made of commercially pure aluminum and is generally prism-shaped; the face 11 to be coupled to the pot, here designated by the reference numeral 12, is shaped complementarily to the curvature of said pot 12.

The face 11 furthermore has, in this case, ribs 13 having a triangular cross-section and running parallel to each other.

The pot 12, advantageously made of stainless steel, is substantially shaped like a cylindrical segment in the illustrated case.

To assemble the bottom 10 to the pot 12, first a heating is performed so as to reach approximately the softening temperature of said bottom 10, which is around 400-500 degrees Celsius if made of commercial aluminum.

Once this thermal condition has been reached, the pot 12 is arranged with the bottom 10 in correct position under a press, an appropriate pressure being subsequently applied.

The pressure determines the compression of the ribs 13 until they flatten completely, perfectly duplicating the bottom of the pot 12.

In this stage, the aluminum constituting the bottom 10 flows in contact with the underside of the pot 12, said flow producing the close coupling of the two materials.

It should be noted that the flow substantially involves only the material that constitutes the ribs 13, so that the additional material lying below said ribs 13, is not affected.

This allows to have a uniform local behavior, independently of the different local thickness of the bottom 10.

This uniform behavior over the entire surface affected by the pressure causes an equally uniform connection between the bottom 10 and the pot 12.

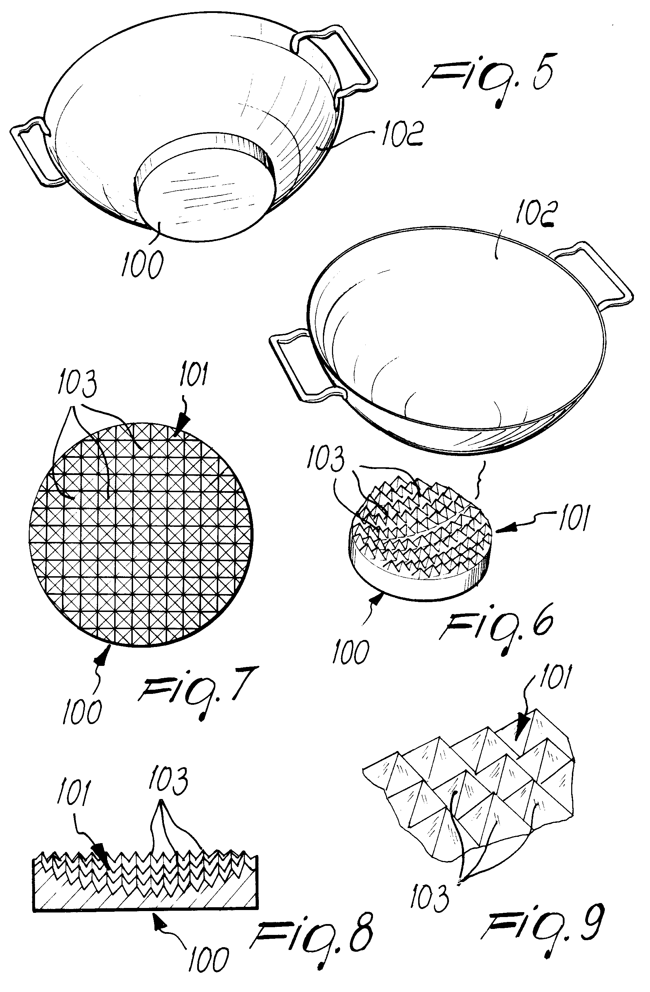

With particular reference to figures 5 to 9, a metal bottom, particularly for pots or the like having a curved lower part, according to the invention, is generally designated by the reference numeral 100 in a second embodiment.

The bottom 100, in this case, is substantially disk-shaped and its surface 101 to be connected to the pot, here designated by the reference numeral 102, is concave and shaped so as to form a plurality of pyramid-shaped cusps 103 arranged in a grid-like fashion.

In this case, the pot 102 is substantially hemispherical, whereas the surface 101 of the bottom 100 forms, except for the cusps 103, a spherical portion complementary to said pot.

Furthermore, as regards the processes for connecting the pot 102 and the bottom 100, reference is made to what has been described with regard to the first embodiment.

In this second embodiment, too, the bottom 100 is made of commercially pure aluminum, whereas the pot 102 is made of stainless steel.

In practice it has been observed that the intended aim and objects have been achieved; laboratory tests have in fact had extremely positive results, since the shape given to the surface for connecting the bottom to the pot is a crucial factor for a stable and quick connection simply by pressure and appropriate temperature.

The bottom according to the invention makes the problem of the connection to the pot independent of the shape and of the possibly variable thickness of said bottom, thus allowing to produce pots the shapes whereof are adapted for the use for which they are meant.

The present invention is susceptible of numerous modifications and variations, all of which are within the scope of the inventive concept.

All the details may furthermore be replaced with other technically equivalent elements.

As regards the materials, they may also be different from the steel-aluminum combination, bearing in mind, however, that the softening temperature of the material constituting the bottom must be sufficiently different (lower) than that of the material constituting the pot.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Variable-thickness metal bottom, particularly for pots or the like, characterized in that its surface (11, 101), which is meant to be joined to the lower part of the pot (12, 102) or the like, is shaped so as to form a plurality of protrusions (13, 103) evenly distributed thereon.

2. Bottom according to claim 1, characterized in that said protrusions are shaped so as to form ribs (13) having a substantially triangular cross-section, being parallel to each other and being evenly distributed over the face (101) of the bottom (10).

3. Bottom according to claim 1, characterized in that said protrusions are shaped so as to form cusps (103).

4. Bottom according to claim 2, characterized in that said cusps (103) are substantially pyramids or cones evenly distributed over the face (101) of the bottom (100).

5. Bottom according to one or more of the preceding claims, characterized in that the surface (11, 101) meant to be joined to said pot (12, 102) or the like is shaped, except for said protrusions (13, 103), substantially like a portion of a cylinder or of a sphere.

6. Pot with bottom according to claims 1 and 5, characterized in that its lower shape is substantially that of a cylindrical segment, the surface (11) of said bottom (10) meant for connection to said pot (12) being shaped complementarily to said pot except for said protrusions (13).

7. Pot with bottom according to claims 1 and 5, characterized in that its lower shape is substantially that of a spherical segment, the surface (101) of said bottom (100) meant for connection to said pot (102) being shaped complementarily to said pot except for said protrusions (103).

8. Bottom according to one or more of the preceding claims, characterized in that it is made of commercially pure aluminum or alloys thereof, which constitute an element for heat transmission and accumulation.
